# EUROPÄISCHE PATENTANMELDUNG

(11) **EP 4 328 142 A1**
(43) Veröffentlichungstag der Anmeldung: **28.02.2024**
(21) Anmeldenummer: 23176920.9
(22) Anmeldetag: 02.06.2023
(51) Int. Cl.: B65D 1/02, B65D 65/46, D21H 19/34, D21H 27/10, C09D 101/04, C09D 189/00, D21H 19/24

(54) **BEHÄLTER UMFASSEND FASERN UND VERFAHREN ZUM BESCHICHTEN EINES BEHÄLTERS**

(30) Priorität: 25.08.2022 DE 102022121473
(71) Anmelder: Krones AG, 93073 Neutraubling (DE)
(72) Erfinder: LAPPE, Ulrich, Neutraubling (DE); ALBRECHT, Thomas, Neutraubling (DE); BIRK, Martina, Neutraubling (DE); ENGELHARD, Patrick, Neutraubling (DE); BREITSCHAEDEL, Sandra, Neutraubling (DE); GROSSER, Angelika, Neutraubling (DE); ZACHARIAS, Joerg, Neutraubling (DE); NEUBAUER, Michael, Neutraubling (DE); WAHL, Matthias, Neutraubling (DE); WINZINGER, Frank, Neutraubling (DE)
(74) Vertreter: Grünecker Patent- und Rechtsanwälte PartG mbB

(57) **Zusammenfassung**

Die Erfindung betrifft einen Behälter (1, 4, 7, 11) umfassend Fasern wobei der Behälter (1, 4, 7, 11) weiter eine Beschichtung (3, 6, 9, 10, 13) umfasst, die biologisch abbaubar ist. Weiter betrifft die Erfindung ein Verfahren zum Beschichten eines Behälters (2, 5, 8, 12) umfassend Fasern zum Herstellen des Behälters (1, 4, 7, 11).

## Beschreibung

Die Erfindung betrifft einen Behälter umfassend Fasern und ein Verfahren zum Herstellen eines Behälters gemäß den unabhängigen Ansprüchen.

### Stand der Technik

Zurzeit ist nach der Herstellung von Pulpeflaschen eine Beschichtung der Innen- und/oder Außenseite erforderlich, bevor die Pulpeflaschen einer weiteren Verwendung zugeführt werden. Im Allgemeinen werden dazu unterschiedliche Polymerbeschichtungen verwendet, die für einen Kontakt mit Lebensmitteln zugelassen sind. Für ein Recyceln der Pulpeflaschen ist das Materialgemisch ungünstig und auch eine biologische Abbaubarkeit ist nicht gegeben.

### Aufgabe

Die Aufgabe der Erfindung ist es, einen Behälter umfassend Fasern und ein Verfahren zum Herstellen eines Behälters zur Verfügung zu stellen, wobei der Behälter Barriereeigenschaften gewährleistet und biologisch abbaubar ist.

### Lösung

Die Aufgabe wird gelöst durch das Fasermaterial zum Herstellen eines Behälters, das Verfahren zum Herstellen eines Behälters und den Behälter umfassend das Fasermaterial gemäß den unabhängigen Ansprüchen. Weitere Ausführungsformen sind in den Unteransprüchen offenbart.

Der erfindungsgemäße Behälter umfasst Fasern wobei der Behälter weiter eine Beschichtung umfasst, die biologisch abbaubar ist.

Dies ermöglicht eine einfache Handhabung des Behälters nach seinem Verwendungsende.

Der Behälter mit Beschichtung kann auch als beschichteter Behälter bezeichnet werden und ein Behälter, auf den erst eine Beschichtung aufgebracht wird bzw. der Behälter an sich, kann als Behälter bezeichnet werden.

Die Fasern können Holz- und/oder Zellulosefasern umfassen. Für das Herstellen des Behälters können die Fasern in einer faserhaltigen, fluiden Masse bereitgestellt werden, die beispielsweise Pulpe sein oder umfassen kann. Der fluide Anteil der Masse kann Wasser umfassen.

Die Beschichtung kann eine Eimembran umfassen. Die Eimembran sorgt für eine lange Haltbarkeit der Eier und bei der hohen Anzahl von verarbeiteten Eiern kann die von der Eierschale getrennte Eimembran als Beschichtung genutzt werden.

Die Beschichtung kann ein biologisch abbaubares Biopolymer umfassen, beispielsweise Polyhydroxyalkanoat. Mit den biologisch abbaubaren Biopolymer kann ein Gewindebereich verstärkt werden, wenn beispielsweise eine Beschichtung des Gewindes von außen erfolgt.

Die Beschichtung kann mikrofibrillierte Zellulose umfassen. Mikrofibrillierte Zellulose kann durch Homogenisierung von Zellulose bei hohem Druck und hoher Temperatur erzeugt werden. Die Homogenisierung kann durch Mahlen oder Ultraschall erfolgen. Eine Beschichtung mit mikrofibrillierter Zellulose kann eine Stabilisierung des Behälters erreichen.

Die Beschichtung kann Wachs, Gelschicht, Zuckerschicht, Treberschalen, Orangenschalen, Naturdarm, Naturmagen, Collagendarm und/oder Kautschuk umfassen. Die Gel- und Zuckerschicht können für eine Innenbeschichtung des Behälters vorgesehen sein. Treber- und Orangenschalen können abdichtende Wirkungen haben.

Die Beschichtung kann aufgebracht sein auf einer Innenfläche des Behälters und/oder einer Außenfläche des Behälters und/oder einer Außenfläche eines Gewindes des Behälters.

Eine Beschichtung auf der Außenfläche kann den Behälter gegen ein Durchfeuchten von außen und/oder eine Sauerstoffpermeation von der Umgebung in den Behälter hinein schützen. Eine Beschichtung auf der Innenfläche kann vor einen Verlust von Wasserdampf, Kohlenstoffdioxid und/oder Stickstoff oder dergleichen aus dem Behälter an die Umgebung schützen. Dies kann beispielsweise sinnvoll sein, wenn sich Produkt in dem beschichteten Behälter befindet und es bis zum Verbrauch haltbar sein bzw. bleiben soll.

Ein Gewinde des Behälters kann mikrofibrillierte Zellulose umfassen. Durch die mikrofibrillierte Zellulose kann eine Stabilisierung des Gewindes erreicht werden.

Ein Verfahren zum Beschichten eines Behälters umfassend Fasern zum Herstellen des Behälters, wie weiter oben oder weiter unten beschrieben, umfasst ein Aufbringen der Beschichtung, die biologisch abbaubar ist.

Die Beschichtung kann die Beschichtung, wie weiter oben oder weiter unten beschrieben, sein oder umfassen.

Das Aufbringen kann ein Aufbringen einer Eimembran umfassen.

Das Aufbringen kann ein Aufbringen eines biologisch abbaubaren Biopolymers umfassen, beispielsweise Polyhydroxyalkanoat.

Das Aufbringen kann ein Aufbringen von mikrofibrillierte Zellulose umfassen.

Das Aufbringen kann ein Aufbringen von Wachs, Gelschicht, Zuckerschicht, Treberschalen, Orangenschalen, Naturdarm, Naturmagen, Collagendarm und/oder Kautschuk umfassen.

Das Aufbringen kann auf einer Innenfläche des Behälters und/oder einer Außenfläche des Behälters und/oder einer Außenfläche eines Gewindes des Behälters erfolgen.

Das Aufbringen kann mittels Aufsprühen und/oder Eintauchen erfolgen.

Das Aufbringen kann bei einer Temperatur in einem Bereich von 50°C bis 60°C erfolgen.

Das Verfahren kann weiter ein Aushärten der Beschichtung umfassen.

Eine Vorrichtung zum Aufbringen einer biologisch abbaubaren Beschichtung auf einen Behälter, der Fasern umfasst. Die biologisch abbaubare Beschichtung kann eine biologisch abbaubare Beschichtung sein, wie sie weiter oben oder weiter unten beschrieben wird.

### Kurze Figurenbeschreibung

Die beigefügten Figuren stellen beispielhaft zum besseren Verständnis und zur Veranschaulichung Aspekte und/oder Ausführungsbeispiele der Erfindung dar. Es zeigt:
Figur 1 eine erste Ausführungsform eines beschichteten Behälters mit einer biologisch abbaubaren Beschichtung auf der Innenfläche,
Figur 2 eine zweite Ausführungsform eines beschichteten Behälters mit einer biologisch abbaubaren Beschichtung auf der Außenfläche des Behälters und der Außenfläche des Gewindes des Behälters,
Figur 3 eine dritte Ausführungsform eines beschichteten Behälters mit einer biologisch abbaubaren Beschichtung auf der Innenseite der Außenfläche des Behälters und
Figur 4 eine vierte Ausführungsform eines beschichteten Behälters mit einer biologisch abbaubaren Beschichtung auf der Außenfläche des Gewindes des Behälters.

### Ausführliche Figurenbeschreibung

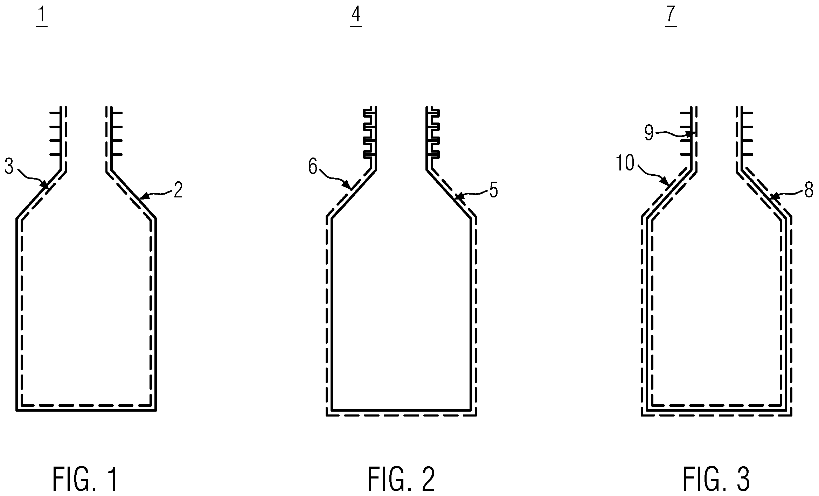

Die Figur 1 zeigt erste Ausführungsform eines beschichteten Behälters 1 mit einer biologisch abbaubaren Beschichtung 3 auf der Innenfläche des Behälters 2. Die Beschichtung 3 auf der Innenfläche des Behälters 2 kann vor einem Verlust von Wasserdampf, Kohlenstoffdioxid und/oder Stickstoff oder dergleichen aus dem Behälter an die Umgebung schützen, beispielsweise, wenn sich Produkt in dem beschichteten Behälter 1 befindet und es bis zum Verbrauch haltbar sein bzw. bleiben soll. Beispielsweise kann die Beschichtung ein biologisch abbaubares Biopolymer umfassen, beispielsweise Polyhydroxyalkanoat, und/oder die Beschichtung kann Wachs, Gelschicht, Zuckerschicht, Treberschalen, Orangenschalen, Naturdarm, Naturmagen, Collagendarm und/oder Kautschuk umfassen oder die Beschichtung kann mikrofibrillierte Zellulose umfassen.

Die Figur 2 zeigt eine zweite Ausführungsform eines beschichteten Behälters 4 mit einer biologisch abbaubaren Beschichtung 6 auf der Außenfläche des Behälters 5 und der Außenfläche des Gewindes des Behälters 5. Die Beschichtung auf den Außenflächen kann den beschichteten Behälter gegen ein Durchfeuchten von außen und/oder eine Sauerstoffpermeation von der Umgebung in den Behälter hinein schützen. Dies kann beispielsweise sinnvoll sein, wenn sich Produkt in dem beschichteten Behälter 4 befindet und es bis zum Verbrauch haltbar sein bzw. bleiben soll. Durch eine Beschichtung des Gewindes kann eine Stabilisierung des Gewindes erreicht werden. Die biologisch abbaubare Beschichtung 6 kann die hinsichtlich der Figur 1 bereits erwähnten Arten umfassen.

Die Figur 3 zeigt eine dritte Ausführungsform eines beschichteten Behälters 7 mit einer biologisch abbaubaren Beschichtung 9 auf der Innenfläche und einer Beschichtung 10 der Außenfläche des Behälters 8. Die Außenfläche des Gewindes ist hierbei nicht beschichtet. Da die Innenfläche des Behälters 7 beschichtet ist, können Barriereeigenschaften auch im Bereich des Gewindes gewährleistet werden. In verschlossenem Zustand kann ein Deckel auf das Gewinde aufgebracht sein, sodass das Gewinde durch Einflüsse von außen geschützt sein kann, auch wenn die Außenfläche des Gewindes selbst keine Beschichtung aufweist. Die biologisch abbaubare Beschichtung 6 kann die hinsichtlich der Figur 1 bereits erwähnten Arten umfassen.

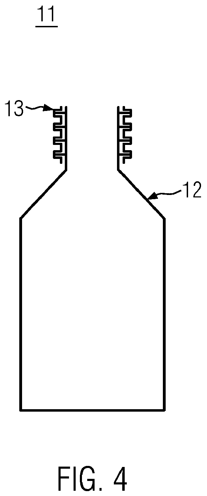

Die Figur 4 zeigt eine vierte Ausführungsform eines beschichteten Behälters 11 mit einer biologisch abbaubaren Beschichtung 13 auf der Außenfläche des Gewindes des Behälters 12. Die biologisch abbaubare Beschichtung 6 kann die hinsichtlich der Figur 1 bereits erwähnten Arten umfassen.

Beispielsweise kann durch ein biologisch abbaubares Biopolymer als biologisch abbaubare Beschichtung 13, der Gewindebereich verstärkt werden kann. Der Gewindebereich kann der Bereich sein oder den Bereich umfassen, der beschichtet ist.

Beispielsweise kann bei einer Beschichtung 13 aus mikrofibrillierte Zellulose eine Stabilisierung des Gewindes erreicht werden kann.

## Patentansprüche

1. Behälter (1, 4, 7, 11) umfassend Fasern wobei der Behälter (1, 4, 7, 11) weiter eine Beschichtung (3, 6, 9, 10, 13) umfasst, die biologisch abbaubar ist.

2. Der Behälter nach Anspruch 1, wobei die Beschichtung (3, 6, 9, 10, 13) eine Eimembran umfasst.

3. Der Behälter nach Anspruch 1 oder 2, wobei die Beschichtung (3, 6, 9, 10, 13) ein biologisch abbaubares Biopolymer umfasst, beispielsweise Polyhydroxyalkanoat.

4. Der Behälter nach einem der Ansprüche 1 bis 3, wobei die Beschichtung (3, 6, 9, 10, 13) mikrofibrillierte Zellulose umfasst.

5. Der Behälter nach einem der Ansprüche 1 bis 4, wobei die Beschichtung (3, 6, 9, 10, 13) umfasst: Wachs, Gelschicht, Zuckerschicht, Treberschalen, Orangenschalen, Naturdarm, Naturmagen, Collagendarm und/oder Kautschuk.

6. Der Behälter nach einem der Ansprüche 1 bis 5, wobei die Beschichtung aufgebracht ist auf einer Innenfläche des Behälters (1) und/oder einer Außenfläche des Behälters (4, 10) und/oder einer Außenfläche eines Gewindes des Behälters (4, 11).

7. Der Behälter nach einem der Ansprüche 1 bis 6, wobei ein Gewinde des Behälters (1, 4, 7, 11) mikrofibrillierte Zellulose umfasst.

8. Verfahren zum Beschichten eines Behälters (2, 5, 8) umfassend Fasern zum Herstellen des Behälters (1, 4, 7, 11) nach einem der Ansprüche 1 bis 7, wobei das Verfahren umfasst:
Aufbringen der Beschichtung (3, 6, 9, 10, 13), die biologisch abbaubar ist.

9. Das Verfahren nach Anspruch 8, wobei das Aufbringen ein Aufbringen einer Eimembran umfasst.

10. Das Verfahren nach Anspruch 8 oder 9, wobei das Aufbringen ein Aufbringen eines biologisch abbaubaren Biopolymers umfasst, beispielsweise Polyhydroxyalkanoat.

11. Das Verfahren nach einem der Ansprüche 8 bis 10, wobei das Aufbringen ein Aufbringen von mikrofibrillierte Zellulose umfasst.

12. Das Verfahren nach einem der Ansprüche 8 bis 11, wobei das Aufbringen auf einer Innenfläche des Behälters (2, 8) und/oder einer Außenfläche des Behälters (5, 8) und/oder einer Außenfläche eines Gewindes des Behälters (5, 12) erfolgt.

13. Das Verfahren nach einem der Ansprüche 8 bis 12, wobei das Aufbringen mittels Aufsprühen und/oder Eintauchen erfolgt.

14. Das Verfahren nach einem der Ansprüche 8 bis 13, wobei das Aufbringen bei einer Temperatur in einem Bereich von 50°C bis 60°C erfolgt.

15. Das Verfahren nach einem der Ansprüche 8 bis 14, weiter umfassend ein Aushärten der Beschichtung.
